(19)

**Europäisches Patentamt**
**European Patent Office**
**Office européen des brevets**

(11) **EP 4 704 170 A2**

(12) **EUROPEAN PATENT APPLICATION**

(43) Date of publication:
04.03.2026 Bulletin 2026/10

(21) Application number: 25198209.6

(22) Date of filing: 26.08.2025

(51) International Patent Classification (IPC):
$H01M\ 4/133^{(2010.01)}$    $H01M\ 4/134^{(2010.01)}$
$H01M\ 4/1393^{(2010.01)}$    $H01M\ 4/1395^{(2010.01)}$
$H01M\ 4/62^{(2006.01)}$    $H01M\ 10/052^{(2010.01)}$
$H01M\ 10/058^{(2010.01)}$    $H01M\ 50/403^{(2021.01)}$
$H01M\ 50/431^{(2021.01)}$    $H01M\ 50/44^{(2021.01)}$
$H01M\ 50/46^{(2021.01)}$

(52) Cooperative Patent Classification (CPC):
H01M 4/133; H01M 4/134; H01M 4/1393;
H01M 4/1395; H01M 4/62; H01M 10/052;
H01M 10/058; H01M 50/403; H01M 50/431;
H01M 50/44; H01M 50/46; H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 02.09.2024 KR 20240118663

(71) Applicant: **SAMSUNG SDI CO., LTD.**
**Yongin-si, Gyeonggi-do 17084 (KR)**

(72) Inventors:
• **Park, Changwon**
**17084 Yongin-si, Gyeonggi-do (KR)**
• **Yang, Hosung**
**17084 Yongin-si, Gyeonggi-do (KR)**
• **You, Duckjae**
**17084 Yongin-si, Gyeonggi-do (KR)**
• **Woo, Jiye**
**17084 Yongin-si, Gyeonggi-do (KR)**
• **Yuk, Seoyeon**
**KR Yongin-si, Gyeonggi-do (KR)**

(74) Representative: **Michalski Hüttermann & Partner**
**Patentanwälte mbB**
**Kaistraße 16A**
**40221 Düsseldorf (DE)**

(54) **ELECTRODE FOR RECHARGEABLE LITHIUM BATTERY AND RECHARGEABLE LITHIUM BATTERY INCLUDING THE SAME**

(57) Examples of the disclosure include an electrode for a rechargeable lithium battery, and a rechargeable lithium battery including the electrode. The electrode for a rechargeable lithium battery includes a functional layer including a boron nitride nanosheet and a boron nitride nanotube.

[FIG. 1]

EP 4 704 170 A2

## Description

## BACKGROUND

### 1. Field

Electrodes for rechargeable lithium batteries, and rechargeable lithium batteries including the electrodes are disclosed.

### 2. Description of the Related Art

A rechargeable lithium battery may be recharged, and may have three or more times as much energy density per unit weight as a conventional lead storage battery, nickel-cadmium battery, nickel hydrogen battery, nickel zinc battery, or the like. The rechargeable lithium battery may be also charged at a high rate and thus, may be commercially manufactured for, e.g., a laptop, a cell phone, an electric tool, an electric bike, and the like. Improving the energy density of rechargeable lithium batteries may be advantageous.

Such a rechargeable lithium battery is manufactured by injecting an electrolyte into an electrode assembly, which includes a positive electrode including a positive electrode active material capable of intercalating/deintercalating lithium ions, and a negative electrode including a negative electrode active material capable of intercalating/deintercalating lithium ions.

Between the positive electrode and the negative electrode, a separator is generally interposed, and the separator includes a ceramic layer coated on one side, or on both sides, of a polymer fabric panel. The ceramic layer has advantages of compensating for insufficient heat resistance and mechanical strength of the polymer fabric panel, but disadvantages of increasing a thickness of the separator and the rechargeable lithium battery including the separator, and inefficiently dissipating heat generated during operation of the rechargeable lithium battery.

## SUMMARY

Some example embodiments include an electrode for a rechargeable lithium battery, including a functional layer exhibiting improved functionality over generally known separators.

Some example embodiments include a rechargeable lithium battery including the electrode of the example embodiment.

Some example embodiments include an electrode for a rechargeable lithium battery, including a functional layer including a boron nitride nanosheet and a boron nitride nanotube.

Some example embodiments include a rechargeable lithium battery including the electrode of the example embodiment.

The functional layer can exhibit improved functions (e.g., heat resistance, mechanical strength, heat dissipation, insulation properties, and the like) compared to generally known separators.

By using the electrode of some example embodiments including the functional layer, a rechargeable lithium battery can be manufactured without using a generally known separator, and heat generated during operation of the rechargeable lithium battery can be efficiently dissipated even with a thin thickness.

## BRIEF DESCRIPTION OF THE DRAWINGS

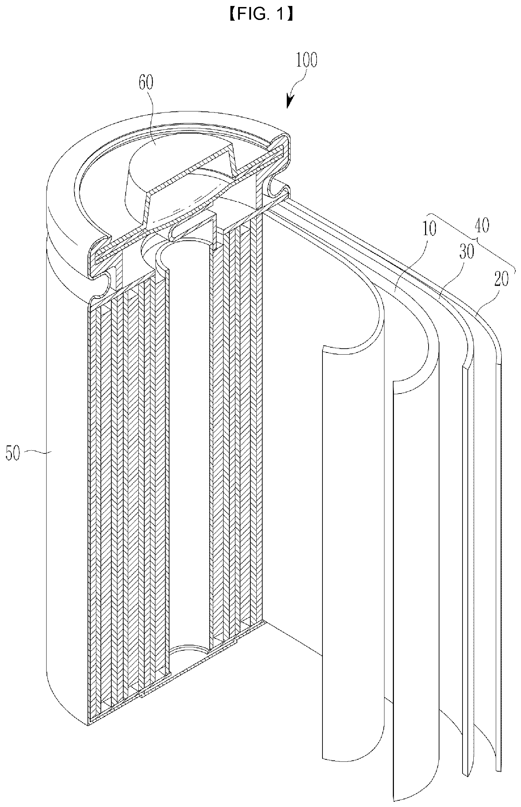

FIGS. 1 to 4 are schematic views illustrating rechargeable lithium batteries, according to some example embodiments.

## DETAILED DESCRIPTION

Hereinafter, example embodiments of the present disclosure are described in detail. However, these embodiments are examples, the present disclosure is not limited thereto and the present disclosure is defined by the scope of claims.

As used herein, when specific definition is not otherwise provided, it is understood that when an element such as a layer, film, region, or substrate is referred to as being "on" another element, it can be "directly on" the other element or intervening elements may also be present.

As used herein, when specific definition is not otherwise provided, the singular may also include the plural. In addition, unless otherwise specified, "A or B" may mean "including A, including B, or including A and B."

As used herein, "combination thereof" may mean a mixture, a stack, a composite, a copolymer, an alloy, a blend, or a reaction product of constituents.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

**Current Collector:**

Some example embodiments include an electrode for a rechargeable lithium battery, including a functional layer including a boron nitride nanosheet and a boron nitride nanotube.

The functional layer can exhibit improved functions (e.g., heat resistance, mechanical strength, heat dissipation, insulation properties, and the like) compared to generally known separators.

By using an electrode of some example embodiments including the functional layer, a rechargeable lithium battery can be manufactured without using a generally known separator, and heat generated during operation of the rechargeable lithium battery can be efficiently dissipated even with a thin thickness.

Hereinafter, an electrode according to some example embodiments is described in more detail.

Main Components of Functional Layer

The functional layer includes two types of materials made of the same compound but having different forms.

The boron nitride is a compound that exhibits desired or improved heat resistance, mechanical strength, heat dissipation, and insulation properties, and depending on the form thereof, specific functions can be relatively specialized.

Boron Nitride Nanosheet

The boron nitride nanosheet may have a thickness in a range of about 1 nm to about 100 nm, about 1 nm to about 50 nm, or about 1 nm to about 10 nm; and each horizontal and vertical length in a range of about 1 nm to about 1000 nm, about 1 nm to about 500 nm, or about 1 nm to about 100 nm.

The boron nitride nanosheet (BNNS) form, compared with the boron nitride nanotube (BNNT) form, is advantageous in terms of mechanical strength, but when used alone, may be disadvantageous in terms of porosity.

Boron Nitride Nanotube

The boron nitride nanotube may have a diameter in a range of about 10 nm to about 100 nm, about 20 nm to about 80 nm, or about 30 nm to about 50 nm; and a length in a range of about 1 nm to about 100 μm, about 5 nm to about 80 μm, or about 10 nm to about 50 μm.

The boron nitride nanotube (BNNT) form, compared with the boron nitride nanosheet (BNNS) form, is advantageous in terms of porosity but when used alone, may be disadvantageous in terms of mechanical strength.

Weight Ratio of Boron Nitride Nanosheet and Boron Nitride Nanotube

The boron nitride nanosheet and the boron nitride nanotube may have a weight ratio of about 1:9 to about 9:1, about 2:8 to about 8:2, about 3:7 to about 7:3, or about 4:6 to about 6:4. Within the ranges, the boron nitride nanosheet and the boron nitride nanotube may be mixed to achieve a synergistic effect of mutual functions.

Porosity of Functional Layer

The functional layer may have a porosity in a range of about 10 volume% to about 60 volume%, about 20 volume% to about 60 volume%, or about 30 volume% to about 60 volume%, based on 100 volume% of a total volume of the functional layer.

When the porosity is within the ranges indicated above, an electrolyte may be impregnated/immersed into the functional layer, and thus allow the functional layer to function as a separator.

For reference, the porosity of the functional layer may be obtained by substituting volume density ($\rho$) and true density ($\rho c$) into Equation 2.

Equation 2:

$$\text{Porosity (P)} = 1-\rho/\rho c(\%)$$

In Equation 2, the volume density ($\rho$) is calculated from a weight and a volume of the functional layer, and the true density ($\rho c$) may be obtained from a theoretical density and a composition ratio of each material.

In addition, a pore distribution of the functional layer may be measured by using a capillary flow porometer (a permeability measuring device, Manufacturer: PMI (Porous Material Inc.)) within a pressure range in a range of about 0 PSI to about 500 PSI.

Thickness of Functional Layer

The functional layer may have a thickness in a range of about 5 $\mu$m to about 20 $\mu$m, about 10 $\mu$m to about 20 $\mu$m, or about 10 $\mu$m to about 15 $\mu$m.

Even at such a thin thickness, the functional layer may in general exhibit improved functionality, compared with commonly known separators.

Additional Components of Functional Layer

The functional layer may further include a binder.

The binder is configured to adhere materials constituting the functional layer, and adhere the materials to electrode active material layers.

The binder may include polyvinylidene fluoride (PVdF), but is not limited thereto.

The binder may be included in an amount in a range of about 60 parts by weight to about 180 parts by weight, about 80 parts by weight to about 140 parts by weight, or about 80 parts by weight to about 120 parts by weight, based on 100 parts by weight of a total amount of the boron nitride nanosheet and the boron nitride nanotube.

Method of Forming Functional Layer

A method of forming the functional layer is not particularly limited but may include electrospraying. When the electrospraying is used, the functional layer may be formed to have a thinner thickness.

The electrospraying may be performed under common conditions known in the art.

Structure of Electrode

The electrode for the rechargeable lithium battery may include a current collector; an electrode active material layer on the current collector; and a functional layer on the electrode active material layer.

The electrode active material layer may be or include a positive electrode active material layer or a negative electrode active material layer. The positive electrode active material layer and the negative electrode active material layer is described below.

**Rechargeable Lithium Battery:**

Some example embodiments include a rechargeable lithium battery, including a positive electrode; a negative electrode; and an electrolyte between the positive electrode and the negative electrode, wherein at least one of the positive electrode and the negative electrode includes the aforementioned electrode of some example embodiments.

The rechargeable lithium battery may not include a separator.

By using the electrode of the aforementioned example embodiment including the aforementioned functional layer, a rechargeable lithium battery may be manufactured without using a generally known separator, and heat generated during operation of the rechargeable lithium battery may be efficiently dissipated even with a thin thickness.

Hereinafter, a rechargeable lithium battery of some example embodiments is described in detail, excluding duplicate descriptions.

Positive Electrode Active Material

The positive electrode active material may be or include a compound (lithiated intercalation compound) capable of intercalating and deintercalating lithium. For example, one or more types of composite oxides of lithium and a metal such as or including at least one of cobalt, manganese, nickel, and combinations thereof may be included.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be included. $Li_aA_{1-}$

$_bX_bO_{2-c}D_c$ (0.90≤a≤1.8, 0≤b≤0.5, 0≤c≤0.05); $Li_aMn_{2-b}X_bO_{4-c}D_c$ (0.90≤a≤1.8, 0≤b≤0.5, 0≤c≤0.05); $Li_aNi_{1-b-c}Co_bX_cO_{2-\alpha}D_\alpha$ (0.90≤a≤1.8, 0≤b≤0.5, 0≤c≤0.5, 0<α<2); $Li_aNi_{1-b-c}Mn_bX_cO_{2-\alpha}D_\alpha$ (0.90≤a≤1.8, 0≤b≤0.5, 0≤c≤0.5, 0<α<2); $Li_aNi_bCo_cL^1_d$-$G_eO_2$ (0.90≤a≤1.8, 0≤b≤0.9, 0≤c≤0.5, 0≤d≤0.5, 0≤e≤0.1); $Li_aNiG_bO_2$ (0.90≤a≤1.8, 0.001≤b≤0.1); $Li_aCoG_bO_2$ (0.90≤a≤1.8, 0.001≤b≤0.1); $Li_aMn_{1-b}G_bO_2$ (0.90≤a≤1.8, 0.001≤b≤0.1); $Li_aMn_2G_bO_4$ (0.90≤a≤1.8, 0.001≤b≤0.1); $Li_aMn_{1-g}G_gPO_4$ (0.90≤a≤1.8, 0≤g≤0.5); $Li_{(3-f)}Fe_2(PO_4)_3$ (0≤f≤2); and $Li_aFePO_4$ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: $Li_{a1}Ni_{x1}M^1_{y1}M^2_{z1}O_{2-b1}X_{b1}$

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, $M^1$ and $M^2$ each independently is or includes one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: $Li_{a2}Co_{x2}M^3_{y2}O_{2-b2}X_{b2}$

In Chemical Formula 12, 0.9≤a2≤1.8, 0.7≤x2≤1, 0≤y2≤0.3, 0.9≤x2+y2≤1.1, and 0≤b2≤0.1, $M^3$ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: $Li_{a3}Fe_{x3}M^4_{y3}PO_{4-b3}X_{b3}$

In Chemical Formula 13, 0.9≤a3≤1.8, 0.6≤x3≤1, 0≤y3≤0.4, and 0≤b3≤0.1, $M^4$ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: $Li_{a4}Ni_{x4}Mn_{y4}M^5_{z4}O_{2-b4}X_{b4}$

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, $M^5$ is or includes one or more of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 %, or greater than or equal to about 94 mol% and less than or equal to about 99 mol%, based on 100 mol% of metal excluding lithium in the lithium transition metal composite oxide. The high-nickel positive electrode active material can achieve high capacity and can be applied to high-capacity, high-density rechargeable lithium batteries.

<u>Positive Electrode</u>

The positive electrode for a rechargeable lithium battery may include a current collector, and a positive electrode active material layer on the current collector. The positive electrode active material layer may include a positive electrode active material, and may further include a binder and/or a conductive material.

For example, the positive electrode may further include an additive that can function as a sacrificial positive electrode.

A content of the positive electrode active material may be in a range of about 90 wt% to about 99.5 wt% based on 100 wt% of the positive electrode active material layer, and each content of the binder and the conductive material may be in a range of about 0.5 wt% to about 5 wt% based on 100 wt% of the positive electrode active material layer.

The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth) acrylic resin, a polyester resin, and nylon, but are not limited thereto.

The conductive material is included to provide electrode conductivity, and any electrically conductive material may be included as a conductive material unless the electrically conductive material causes a chemical change to the battery. Examples of the conductive material may include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, $SiO_x$ ($0 < x < 2$), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, $SnO_2$, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon, and silicon particles and an amorphous carbon coating layer on the surface of the core.

The Si-based negative electrode active material or Sn-based negative electrode active material may be mixed with the carbon-based negative electrode active material.

Negative Electrode

A negative electrode for a rechargeable lithium battery includes a current collector, and a negative electrode active material layer on the current collector. The negative electrode active material layer includes a negative electrode active material, and may further include a binder and/or a conductive material. The binder may be or include a binder of the aforementioned embodiment.

For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder is configured to adhere the negative electrode active material particles to each other, and to adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is included as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be included as a conductive material unless the electrically conductive material causes a chemical change to the battery. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof.

Electrolyte Solution

An example electrolyte solution for a rechargeable lithium battery may include a non-aqueous organic solvent and a lithium salt.

The non-aqueous organic solvent is configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent may be included alone or in a mixture of two or more types of solvent.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The electrolyte may further include at least one of vinylethyl carbonate, vinylene carbonate, fluoroethylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

Separator

The rechargeable lithium battery may not include a separator. By using the electrode of some example embodiments including the functional layer, a rechargeable lithium battery can be manufactured without using a generally known separator, and heat generated during operation of the rechargeable lithium battery can be efficiently dissipated even with a thin thickness.

When a separator is present, the separator may include at least one of polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and the like.

The separator may include a porous substrate and a coating layer including an organic material, an inorganic material, or a combination thereof on one surface, or on both surfaces, of the porous substrate.

The porous substrate may be or include a polymer film formed of or including any one polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

Rechargeable Lithium Battery

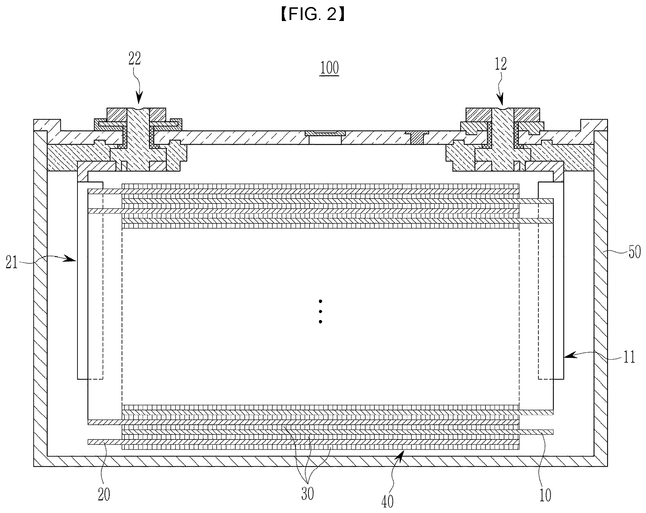

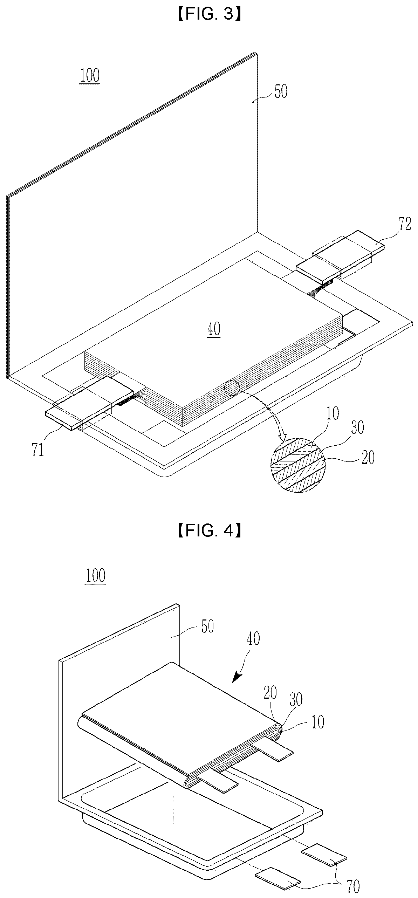

The rechargeable lithium battery may be classified into cylindrical, prismatic, pouch, or coin-type batteries, and the like depending on the shape thereof. FIGS. 1 to 4 are schematic views illustrating the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside.

The rechargeable lithium battery according to some example embodiments may be applicable to automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

**Example 1**

(1) Manufacturing of Negative Electrode

A negative electrode active material slurry was prepared by using a mixture of artificial graphite and silicon particle mixed in a weight ratio of 93.5:6.5 as a negative electrode active material, mixing the negative electrode active material : styrene-butadiene rubber binder : carboxylmethyl cellulose in a weight ratio of 97:1:2, and then, dispersing the obtained mixture in distilled water.

The negative electrode active material slurry was coated on a 10 μm-thick Cu foil, dried at 100 °C, and pressed to form a negative electrode active material layer.

A boron nitride nanosheet with a width*a length*a thickness of 100 nm*100 nm*10 nm was mixed with a boron nitride nanotube with a diameter*a length of 40 nm*10 μm in a weight ratio of 90:10 and then, mixed with 100 parts by weight of a PVdF binder, based on 100 parts by weight of a total weight of the boron nitride nanosheet and the boron nitride nanotube to prepare a mixture for electrospraying.

The mixture for electrospraying was loaded in an electrospray device (Device name: Electrospinning Machine, Manufacturer: NanoNC) and sprayed onto the negative electrode active material layer under the condition of a voltage: 15 kV, a flow rate: 0.7 ml/h, and TCD: 15 cm to form a 10 μm-thick functional layer, thereby obtaining a final negative electrode.

(2) Manufacturing of Positive Electrode

A positive electrode slurry was prepared by mixing $LiNi_{0.91}Co_{0.05}Al_{0.04}O_2$ as a positive electrode active material, polyvinylidene fluoride (PVDF) as a binder, and carbon as a conductive agent in a weight ratio of 92:4:4, and dispersing the mixture into N-methyl-2-pyrrolidone. This slurry was coated on a 10 $\mu$m-thick aluminum foil, dried, and pressed to manufacture a positive electrode.

(3) Preparation of Electrolyte Solution

An electrolyte solution was prepared by mixing 1.5 M lithium salt ($LiPF_6$) with a carbonate solvent including ethylene carbonate (EC): ethyl methyl carbonate (EMC): dimethyl carbonate (DMC) mixed in a volume ratio of 20:40:40.

(4) Manufacturing of Rechargeable Lithium Battery Cell

The manufactured positive and negative electrodes were assembled to obtain an electrode assembly, and then inserted into a prismatic case, and the electrolyte was injected thereinto to manufacture a rechargeable lithium battery cell.

**Example 2**

A negative electrode and a rechargeable lithium battery cell of Example 2 were manufactured in the same manner as in Example 1 with a difference that the weight ratio of the boron nitride nanosheet and the boron nitride was changed to 70:30.

**Example 3**

A negative electrode and a rechargeable lithium battery cell of Example 3 were manufactured in the same manner as in Example 1 with a difference that the weight ratio of the boron nitride nanosheet and the boron nitride was changed to 50:50.

**Example 4**

A negative electrode and a rechargeable lithium battery cell of Example 4 were manufactured in the same manner as in Example 1 with a difference that the weight ratio of the boron nitride nanosheet and the boron nitride was changed to 30:70.

**Example 5**

A negative electrode and a rechargeable lithium battery cell of Example 5 were manufactured in the same manner as in Example 1 with a difference that the weight ratio of the boron nitride nanosheet and the boron nitride was changed to 10:90.

**Comparative Example 1 (Ref.)**

A negative electrode and a rechargeable lithium battery cell according to Comparative Example 1 were manufactured in the same manner as in Example 1 with a difference that the negative electrode was obtained by not forming the functional layer on the negative electrode active material layer, and between the negative and positive electrodes, a 25 $\mu$m-thick polyethylene separator was interposed.

**Comparative Example 2**

A coating layer including $Al_2O_3$ particles with a D50 particle diameter of 0.2 $\mu$m and a PVdF binder (Mw: 500,000 g/mol) in a weight ratio of 90:10 was formed on a 10 $\mu$m-thick polyethylene fabric panel, which was included as a separator.
A negative electrode and a rechargeable lithium battery cell according to Comparative Example 2 were manufactured in the same manner as in Comparative Example 1 with a difference that the separator was included.

**Comparative Example 3**

A negative electrode and a rechargeable lithium battery cell according to Comparative Example 3 were manufactured in the same manner as in Example 1 with a difference that the boron nitride nanosheet alone was included.

**Comparative Example 4**

A negative electrode and a rechargeable lithium battery cell according to Comparative Example 4 were manufactured in the same manner as in Example 1 with a difference that the boron nitride nanotube alone was included.

**Comparative Example 5**

A functional layer was formed on a 10 $\mu$m-thick polyethylene fabric panel in the same manner as in Example 5, which was included as a separator.
A negative electrode and a rechargeable lithium battery cell according to Comparative Example 5 were manufactured in the same manner as in Comparative Example 1 with a difference that the separator was included.

**Evaluation Example 1: Negative Electrode Evaluation**

Each of the negative electrodes according to Examples 1 to 9 and Comparative Examples 1 to 4 was evaluated in the following method, and the results are shown in Tables 1 to 3 below.

(1) Puncture strength: The permeability was measured using a KES-G5 device from KATO Tech according to a conventional method known in the art.
(2) Air permeability: Air permeability was measured using an EGO1-55-1MR device from Asahi Seiko according to a conventional method known in the art.
(3) Electrolyte Heat Shrinkage:

The negative electrodes were cut into a size of a width*a length = 5 cm*5 cm to prepare samples. Each of the samples was inserted into an aluminum pouch, and the same electrolyte as in Example 1 was injected thereinto, and then allowed to stand at 180 °C in an oven for 1 hour to calculate a heat shrinkage rate according to Equation 1. Herein, the heat shrinkage rate was calculated according to Equation 1.

Equation 1:

$$\text{Heat shrinkage rate} = (L_0 - L_1)/L_0 \times 100$$

$L_0$ is an initial length of the sample and $L_1$ is a length of the sample after leaving the sample at 150 °C for 1 hour.

(4) Thickness: The thickness of the functional layer was measured using a micrometer according to a conventional method known in the art.
(5) Porosity (P): It was calculated by substituting the bulk density ($\rho$) and true density ($\rho c$) into Equation 2.

Equation 2:

$$\text{Porosity } (P) = 1 - \rho/\rho c (\%)$$

In Equation 2, the volume density ($\rho$) was calculated from a weight and a volume of a functional layer film, and the true density ($\rho c$) was obtained from a theoretical density and a composition ratio of each material.

Table 1:

|  | Example 1 | Example 2 | Example 3 | Example 4 | Example 5 |
|---|---|---|---|---|---|
| Puncture strength | 761 | 748 | 644 | 571 | 413 |
| Air permeability (s/100cc) | 258 | 187 | 121 | 96 | 54 |
| Electrolyte heat shrinkage rate (%) @150 °C, 1hr | <1 | <1 | <1 | <1 | <1 |
| Thickness ($\mu$m) | 9-10 | 9-10 | 9-10 | 9-10 | 9-10 |

(continued)

|  | Example 1 | Example 2 | Example 3 | Example 4 | Example 5 |
|---|---|---|---|---|---|
| Porosity (volume%) | 32 | 34 | 39 | 47 | 54 |

Table 2:

|  | Comparative Example 1 | Comparative Example 2 | Comparative Example 3 | Comparative Example 4 | Comparative Example 5 |
|---|---|---|---|---|---|
| Puncture strength | 350 | 538 | 852 | 497 | 613 |
| Air permeability | 243 | 194 | 263 | 71 | 291 |
| (s/100cc) |  |  |  |  |  |
| Electrolyte heat shrinkage rate @150 °C, 1hr | >50 | 46 | <1 | <1 | 19 |
| Thickness ($\mu$m) | 18 | 18 | 9-10 | 9-10 | 18 |
| Porosity (volume%) | 43 | 24 | 17 | 58 | 40 |

According to Tables 1 and 2, the functional layer exhibited improved functions (e.g., heat resistance, mechanical strength, heat dissipation, insulation properties, and the like), compared with generally known separators.

Accordingly, the electrode according to some example embodiments, which is represented by Examples 1 to 5, may be included to manufacture rechargeable lithium batteries without using the generally known separators, and thus efficiently dissipate heat generated during the operation of the rechargeable lithium batteries even with a thin thickness.

Herein, for convenience, the electrode according to some example embodiments was manufactured as only negative electrodes, but even when manufactured as positive electrodes, may achieve desired or improved performance similar to the performance of Examples 1 to 5.

Accordingly, the electrode according to some example embodiments, which is applied to at least either one of positive and negative electrodes, enables safe operation of rechargeable lithium batteries.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

Description of Symbols:

| 100: | rechargeable lithium battery | 10: | positive electrode |
|---|---|---|---|
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

**Claims**

1. An electrode (10, 20) for a rechargeable lithium battery (100), the electrode (10, 20) comprising:
   a functional layer including a boron nitride nanosheet and a boron nitride nanotube.

2. The electrode (10, 20) as claimed in claim 1, wherein the boron nitride nanosheet has:

   a thickness in a range of 1 nm to 100 nm; and
   horizontal and vertical lengths that are each independently in a range of 1 nm to 1000 nm.

3. The electrode (10, 20) according to any of the preceding claims, wherein the boron nitride nanotube has:

   a diameter in a range of 10 nm to 100 nm; and
   a length in a range of 1 $\mu$m to 100 $\mu$m.

4. The electrode (10, 20) according to any of the preceding claims, wherein a weight ratio of the boron nitride nanosheet to the boron nitride is in a range of 1:9 to 9:1.

5. The electrode (10, 20) according to any of the preceding claims, wherein a porosity (P) of the functional layer is in a range of 10 volume% to 60 volume% based on 100 volume% of a total volume of the functional layer, wherein the porosity (P) is obtained according to the following equation, wherein ($\rho$) denotes the volume density and is calculated from a weight and a volume of the functional layer, and ($\rho$c) denotes the true density and is obtained from a theoretical density and a composition ratio of each material: Porosity (P) = 1-$\rho$/$\rho$c(%).

6. The electrode (10, 20) according to any of the preceding claims, wherein the functional layer has a thickness in a range of 5 $\mu$m to 20 $\mu$m.

7. The electrode (10, 20) according to any of the preceding claims, wherein the functional layer further comprises a binder.

8. The electrode (10, 20) as claimed in claim 7, wherein the binder comprises polyvinylidene fluoride (PVdF).

9. The electrode (10, 20) according to any of claims 7 or 8 , wherein the binder is included in an amount in a range of 60 parts by weight to 180 parts by weight based on 100 parts by weight of a total amount of the boron nitride nanosheet and boron nitride nanotube.

10. The electrode (10, 20) according to any of the preceding claims, further comprising:

    a current collector;
    an electrode active material layer on the current collector; and
    a further functional layer on the electrode active material layer.

11. A rechargeable lithium battery (100), comprising:

    a positive electrode (10);
    a negative electrode (20); and
    an electrolyte between the positive electrode (10) and the negative electrode (20),
    wherein at least one of the positive electrode (10) and the negative electrode (20) comprises the electrode (10, 20) configured according to any of the preceding claims.

12. The rechargeable lithium battery (100) as claimed in claim 11, wherein the rechargeable lithium battery (100) does not comprise a separator (30).

【FIG. 1】

【FIG. 2】

【FIG. 3】

【FIG. 4】